# DEMANDE DE BREVET EUROPEEN

(11) **EP 4 183 722 A1**
(43) Date de publication de la demande: **24.05.2023**
(21) Numéro de dépôt: 21209077.3
(22) Date de dépôt: 18.11.2021
(51) Int. Cl.: B65G 15/42, B65G 15/44, B65G 19/08, B65G 19/14, B65G 19/16, B65G 19/28, B65G 21/16, B65G 21/20

(54) **ALIMENTATEUR POUR LE CONDITIONNEMENT DE COMPOSITIONS ALIMENTAIRES**

(71) Demandeur: Tremark France, 29000 Quimper (FR)
(72) Inventeur: MARCHADOUR, Jean-Charles, 29120 Saint Jean Trolimoon (FR)
(74) Mandataire: Lavialle, Bruno François Stéphane

(57) **Abrégé**

Alimentateur (3) pour le convoyage de matières agroalimentaires comprenant :
- un ensemble de deux poulies d'entrainement, une première poulie (12a) et une deuxième poulie (12b), montées en rotation autour d'un premier axe XX' pour la première poulie et un deuxième axe YY' pour la deuxième poulie, et au moins l'une des deux poulies étant entrainée en rotation par un arbre d'entrainement motorisé ;
- une courroie (8) comportant :
• une bande de convoyage (9) comportant une face interne et une face externe, et destinée à être tendue entre ladite première poulie et ladite deuxième poulie, les deux poulies (12a et 12b) coopérant avec ladite face interne de la bande de convoyage (9) ; et
• des moyens de séparation (10) disposés régulièrement sur ladite face externe de la bande de convoyage ; et

- un moyen de guidage placée en regard de la face externe de la bande de convoyage, ledit moyen de guidage contenant un guide à section sensiblement en L (15) comprenant une première paroi, qualifiée de paroi de guidage (16) et une deuxième paroi fixée sur la première paroi, ledit guide (15) et lesdits moyens de séparation (10) étant positionnés en vis-à-vis ; les moyens de séparation comprennent deux types d'ailettes, des ailettes principales (10a) et des ailettes secondaires (10b) plus petites que les ailettes principales (10a) et intercalées entre les ailettes principales (10b).

## Description

La présente invention est du domaine des machines agroalimentaires, et concerne plus particulièrement, mais non exclusivement, le remplissage automatisé des boîtes de conserve. Dans le domaine de l'industrie agroalimentaire, l'utilisation de convoyeurs est assez répandue, et permet de pouvoir automatiser des tâches relatives au déplacement de produits alimentaires dans les différentes sous-unités d'une exploitation ou bien de remplir une fonction plus précise sur un poste de travail, comme :
- la préparation d'un aliment à partir des ingrédients qui le composent ;
- le conditionnement dans un contenant, tel qu'une boîte, un sachet, etc., d'un tel aliment qualifié dans ce cadre de « contenu » ; ou bien encore
- d'effectuer le transport de l'ensemble comprenant le contenant avec son contenu.

Certains convoyeurs, plus particulièrement qualifiés de « convoyeurs à bandes », sont connus et consistent pour l'essentiel en un tapis pouvant comporter des séparateurs délimitant différentes sections, pour le convoyage automatisé de portions qui peuvent être calibrées, ou de produits unitaires, d'une partie basse vers une partie haute.

La demande FR 2 683 214 décrit un tel convoyeur à bandes convenant pour le convoyage d'olives, lesquelles sont convoyées d'une partie basse vers une partie haute dans un ensemble de gouttières contigües et viennent se déverser au-dessus de bocaux amenés par un tapis en contrebas. L'éjection des olives est guidée par un simple capot en arc de cercle. Un tel convoyeur à bandes est peu adapté au remplissage d'un contenant par une composition alimentaire avec des cadences élevées.

La demande WO2016/107655 décrit un convoyeur à bande comportant une courroie crantée coopérant avec des roues dentées pour le défilement de la bande, et dans laquelle la bande comporte des moyens de propulsion pour l'éjection de boîtes ou de bocaux. Un tel convoyeur à bandes est mal adapté pour le remplissage automatisé de contenants par une matière alimentaire fragmentaire, voire pulvérulente, et ne convient pas pour les étapes de mise en conserve des aliments.

La demande US 5 048 671 décrit un convoyeur à bande comportant un ensemble de poulies d'entrainement, la bande comportant disposés régulièrement sur sa face externe des moyens de séparation, ledit convoyeur comprenant un moyen de guidage contenant un guide à section sensiblement en L qui comprend une paroi de guidage et une autre paroi fixée sur la paroi de guidage.

Pour pallier tout ou partie des inconvénients de l'état de la technique précité, la présente invention concerne un alimentateur pour le convoyage de matières agroalimentaires, telles que des matières premières issues de l'agriculture ou leurs produits transformés, comprenant :
- un ensemble de deux poulies d'entraînement, une première poulie et une deuxième poulie, montées en rotation autour d'un premier axe XX' pour la première poulie et un deuxième axe YY' pour la deuxième poulie, et au moins l'une des deux poulies étant entraînée en rotation par un arbre d' entraînement motorisé ;
- une courroie comportant :
   ▪ une bande de convoyage de préférence en matière plastique, comportant une face interne et une face externe, et destinée à être tendue entre ladite première poulie et ladite deuxième poulie, les deux poulies coopérant avec ladite face interne de la bande de convoyage ; et
   ▪ des moyens de séparation disposés régulièrement sur ladite face externe de la bande de convoyage ; et
- un moyen de guidage placée en regard de la face externe de la bande de convoyage, ledit moyen de guidage contenant un guide à section sensiblement en L comprenant une première paroi, qualifiée de paroi de guidage et une deuxième paroi montée sur la première paroi, ledit guide et lesdits moyens de séparation étant positionnés en vis-à-vis, les moyens de séparation comprenant deux types d'ailettes, des ailettes principales et des ailettes secondaires plus petites que les ailettes principales et intercalées entre les ailettes principales.

Dans le cadre de l'invention le terme « alimentateur » désigne un convoyeur comportant un tapis de convoyage, ledit tapis étant refermé sur lui-même à la manière d'un tapis roulant et qualifié de « bande de convoyage », pour le transport d'éléments sur la bande de convoyage entre différents niveaux, par exemple d'une partie basse vers une partie haute d'une unité de production.

Le terme « guide à section sensiblement en L » ou « guide à section en L », dans le cadre de l'invention, désigne un guide comportant deux parois montées l'une sur l'autre par un côté tel que l'inclinaison relative des parois corresponde à un angle « α » de 90° à 135° .

De préférence, lesdits premier et deuxième axes XX' et YY' sont sensiblement parallèles, ce qui évite les mises en torsion de la courroie.

Une telle configuration de l'alimentateur selon l'invention permet de procéder au prélèvement d'une quantité de matière entre deux moyens de séparation, et de pouvoir convoyer ladite matière sans en perdre tout en assurant des cadences élevées. La présence d'un moyen de guidage comportant deux parois disposées en L dans la configuration susmentionnée par rapport aux moyens de séparation, donne la possibilité d'incliner l'alimentateur : ce qui implique que les axes XX' et YY' des poulies d'entraînement de la bande de convoyage n'occupent pas nécessairement une position parallèle au plan du sol, et qu'il devient possible de convoyer des aliments avec les axes des poulies d'entraînement de la bande de convoyage en position verticale. Grâce à une telle configuration, la largeur de la bande de convoyage peut être considérablement réduite, de sorte qu'elle ne forme qu'une ceinture de convoyage munie des moyens de séparation, l'ensemble ceinturant les deux poulies d'entraînement. De plus, grâce à l'agencement des deux types d'ailettes (ailettes principales et ailettes secondaires), il est possible de séparer les différents ingrédients d'une même portion - aux fins notamment de mieux les calibrer - et de les convoyer ensemble en vue de les éjecter dans leur contenant. Un opérateur peut changer de courroie en fonction des besoins, c'est-à-dire en fonction de la taille des récipients à remplir ou du nombre d'ingrédients qui doivent être mis en boîte : un opérateur choisit la courroie de l'alimentateur en adéquation avec la composition alimentaire que l'on veut conditionner.

L'invention est avantageusement mise en œuvre selon les modes de réalisation et les variantes exposées ci-après, lesquels sont à considérer individuellement ou selon toute combinaison techniquement opérante.

Avantageusement, les ailettes s'étendant sur la face externe, et sont de manière préférée prises dans la masse de la bande de convoyage. De telles ailettes font partie intégrante de la courroie et sont obtenues préférentiellement selon un procédé de moulage de la courroie d'une seule pièce.

Avantageusement, la paroi de guidage intègre un profilé en arc de cercle qui s'étend continûment de part et d'autre d'une des deux poulies le long de la bande de convoyage et une ouverture de sortie découpe au moins l'une des deux parois du guide à section sensiblement en L. L'ouverture est destinée au passage des aliments qui doivent être éjectés une fois convoyés jusqu'au-dessus d'un tapis de convoyage amenant des récipients tels que des bocaux ou des boîtes de conserves. Le moyen de guidage est une sorte de coffrage qui permet de délimiter une quantité définie, à la manière d'un récipient, laquelle quantité définie étant déplaçable grâce à la mobilité de la bande de convoyage.

Le moyen de guidage est avantageusement une cuve de guidage fermée sur ses côtés par la paroi de guidage qui enserre la courroie et au moins une des deux poulies d'entraînement. Dans ce cadre, la partie de la cuve de guidage qui fait face aux moyens de séparation de la bande de convoyage est le guide à section en L susvisé. Une telle configuration est de conception simple elle permet d'utiliser la cuve de guidage comme un carter qui renferme d'une part tout ou partie des pièces mécaniques utiles au fonctionnement de l'alimentateur, et d'autre part la courroie de l'alimentateur pour lui servir de guide. Dans la cuve, des orifices peuvent être ménagés pour le passage des moyens d'actionnement de la courroie, tels que l'arbre d'entraînement motorisé ou les axes des moyeux des poulies d'entraînement.

Avantageusement, les poulies d'entraînement sont des poulies comportant des dents, qualifiées de poulies dentées, et, la face interne de la bande de convoyage comporte des rainurages de forme complémentaire auxdites dents des poulies dentées.

Avantageusement, l'arbre d'entraînement motorisé est actionné par un servomoteur, par exemple un servomoteur comprenant un moteur sans balais, dit de type *« Brushless »* en terminologie anglosaxonne, ou un moteur pas-à-pas. La présence d'un servomoteur permet de contrôler étroitement la vitesse de défilement de la bande ou ceinture de convoyage, et de synchroniser ledit défilement en fonction de la vitesse de remplissage de l'alimentateur et/ou de la vitesse d'évacuation des aliments vers leur contenant.

La présente invention concerne également un dispositif de remplissage de récipient alimentaire comprenant :
- un premier alimentateur tel que présenté précédemment dans le cadre de la présente invention ;
- une plaque vibrante comprenant un rebord qui s'étend au-dessus de la cuve de guidage du premier alimentateur ; et
- une trémie destinée à comporter une composition alimentaire et positionnée au-dessus de ladite plaque vibrante.

Le dispositif de remplissage selon l'invention comporte avantageusement un deuxième alimentateur tel que présenté dans le cadre de la présente invention, dans lequel l'ouverture de sortie du deuxième alimentateur est positionnée au-dessus de ladite trémie. Grâce à ce second alimentateur positionné en amont, il est possible d'alimenter en continu la trémie. Avantageusement, la bande de convoyage et les moyens de séparation du deuxième alimentateur sont d'une dimension supérieure à la bande de convoyage et aux moyens de séparation du premier alimentateur. Le premier alimentateur fonctionne pour le remplissage de récipients, tandis que le deuxième alimentateur sert à alimenter la trémie du dispositif, ce qui demande des quantités beaucoup plus importantes et donc un dimensionnement en conséquence.

Le dispositif de remplissage comporte avantageusement un coffrage comprenant un socle et un capot dans lequel est ménagé une gouttière de gavage débouchant à la fois dans la cuve de guidage d'au moins un des alimentateurs sélectionnés parmi le premier alimentateur et le deuxième alimentateur, et, sur la face externe de la courroie.

Le dispositif de remplissage comporte avantageusement une brosse cylindrique montée en regard de la cuve de guidage du premier alimentateur, de préférence dans sa gouttière de gavage. Une telle brosse permet d'éliminer le surplus de la composition alimentaire par brossage, pour que chaque cellule délimitée physiquement entre les ailettes contienne une portion égale.

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente une vue en perspective de l'alimentateur selon l'invention en configuration d'utilisation ;
[Fig. 2] la figure 2 représente une vue en perspective d'un détail de l'alimentateur de la figure 1 avec l'intérieur de l'alimentateur montré avec des hachures ;
[Fig. 3] la figure 3 représente une vue en perspective du même alimentateur avec une vue d'ensemble de la courroie ;
[Fig. 4] la figure 4 représente une vue de dessus du même alimentateur avec une vue d'ensemble de la courroie à l'intérieur de l'alimentateur ;
[Fig. 5] la figure 5 représente une vue en perspective d'un détail du même alimentateur ;
[Fig. 6] la figure 6 représente une vue en perspective de l'alimentateur dont la partie intégrant les poulies et la courroie entre les poulies a été maintenue relevée ;
[Fig. 7] la figure 7 représente une vue en perspective d'un premier alimentateur selon l'invention alimenté par un deuxième alimentateur selon l'invention ;

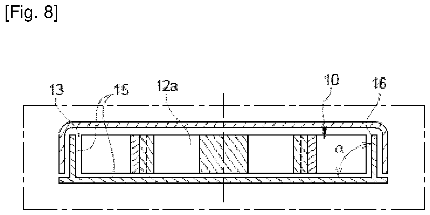

[Fig. 8] la figure 8 représente une vue en coupe de l'alimentateur selon l'invention au niveau de la partie haute qui comporte une poulie et pour lequel l'angle « *α* » entre les deux parois du moyen de guidage est représenté.

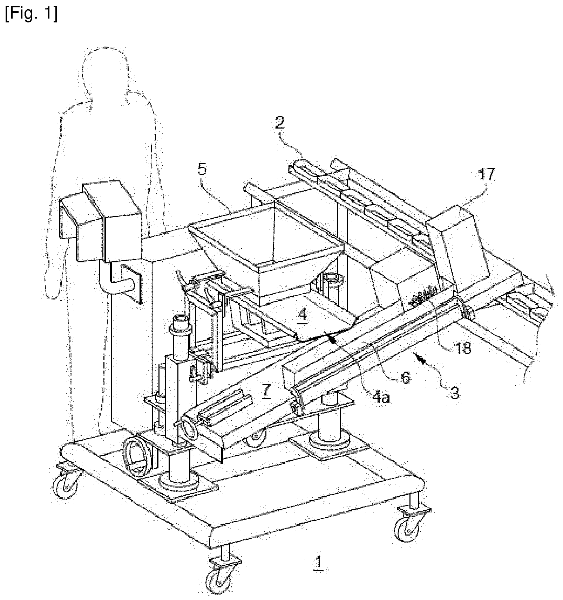

La figure 1 montre un dispositif de remplissage 1 de récipients alimentaires 2 selon l'invention comportant un alimentateur 3 selon l'invention. Le dispositif de remplissage 1 intègre une plaque vibrante 4 et une trémie 5 contenant, un aliment, voire une composition alimentaire, en étant placée au-dessus de la plaque vibrante. La plaque vibrante 4 contient un rebord 4a qui est positionné au-dessus d'une gouttière de gavage 6 ménagée dans un capot 7 qui doit refermer l'alimentateur 3 par le dessus.

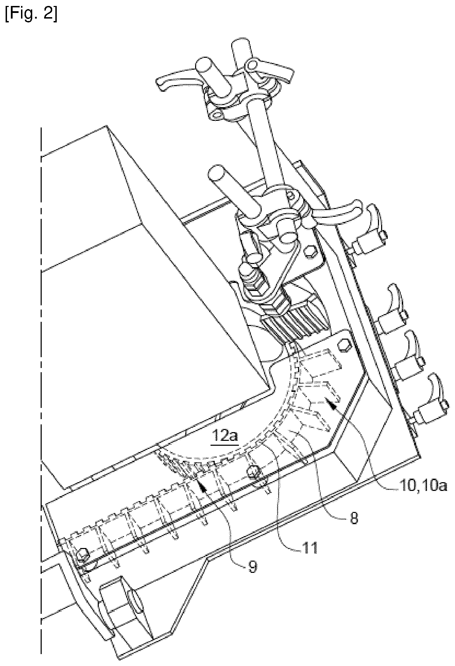

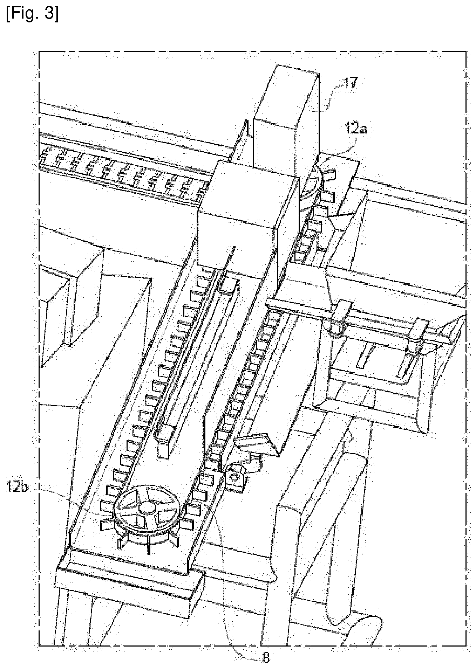

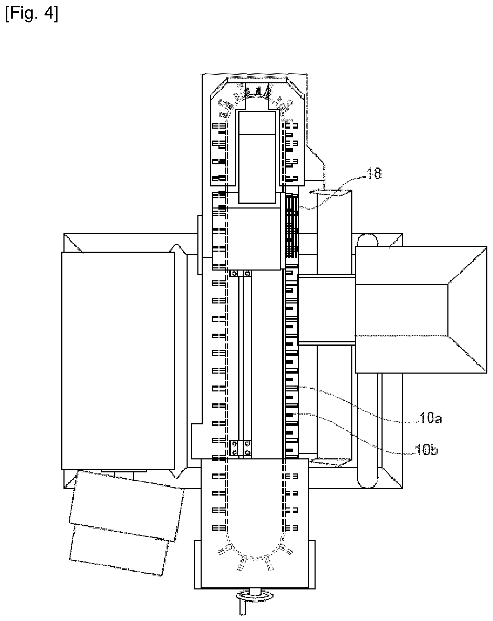

La gouttière 6 débouche sur une courroie 8 de l'alimentateur 3, ladite courroie 8 comporte une bande de convoyage 9, ou ceinture de convoyage, sur laquelle s'étendent un ensemble de moyens de séparation 10 (figures 2 et 3) comportant des ailettes principales 10a et des ailettes secondaires 10b (figure 4). Les ailettes secondaires 10b sont plus petites que les ailettes principales 10a et sont intercalées entre les ailettes principales 10a comme cela est mieux visible sur la figure 4. La courroie 8 comprend des rainurages 11 et est tendue entre deux poulies d'entraînement 12a et 12b, une première poulie dentée et une deuxième poulie dentée dont les dents coopèrent avec lesdits rainurages pour assurer la mise en mouvement de la courroie.

La courroie 8 est montée entre la première poulie 12a et la deuxième poulie 12b dans une cuve de guidage 13 épousant la forme du contour de la bande, ou ceinture de convoyage, et dans laquelle les ailettes 10a et/ou 10b sont aptes à circuler dans un espace délimité par un moyen de guidage contenant un guide à section en L 15 intégrant une paroi de guidage 16 qui ferme les côtés de la cuve de guidage 13 (voir la figure 3). La paroi de guidage est de forme cintrée, configurant un arc de cercle qui s'étend continûment de part et d'autre de la première poulie 12a, le long de la bande de convoyage 9. La première poulie 12a est montée sur un arbre d'entraînement mû par un servomoteur 17. Un tel alimentateur 3 peut être entraîné par un servomoteur asynchrone qui convient pour réaliser du saupoudrage de portions de 20 g dans les récipients alimentaires 2, avec une cadence de 200 portions par minutes.

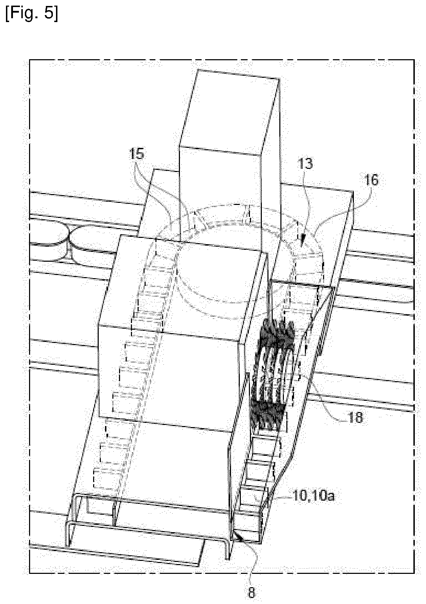

Le dispositif de remplissage 1, comporte selon un mode de réalisation particulièrement préféré, une brosse cylindrique 18 (figure 1, 4 et 5) venant coiffer les ailettes de la courroie 8 par le dessus, dans une ouverture de la gouttière de gavage 6, en aval de la partie de la gouttière dans laquelle doit se déverser la composition alimentaire. La brosse cylindrique 18 permet d'éliminer le surplus de la composition alimentaire par brossage, pour que chaque cellule délimitée physiquement entre les ailettes (10a, 10b) contienne une portion identique. Les portions sont convoyées plus en aval vers la première poulie 12a au niveau de laquelle elles sont éjectées vers les récipients alimentaire 2 (boîtes de conserves, etc.) par une ouverture de sortie découpée sur une paroi du guide à section en L 15.

Un tel dispositif de remplissage 1 permet ainsi de convoyer des portions d'une composition alimentaire avec différents ingrédients qui peuvent être calibrés et vendus séparés dans le récipient alimentaire 2 : ceci s'applique par exemple à une boite de conserve qui contiendra une demi portion de petit pois, un quart de portion de carotte et un quart de portion d'oignon, qui seront bien séparées dans la boîte de conserve, en vue d'une conservation améliorée de ladite composition alimentaire.

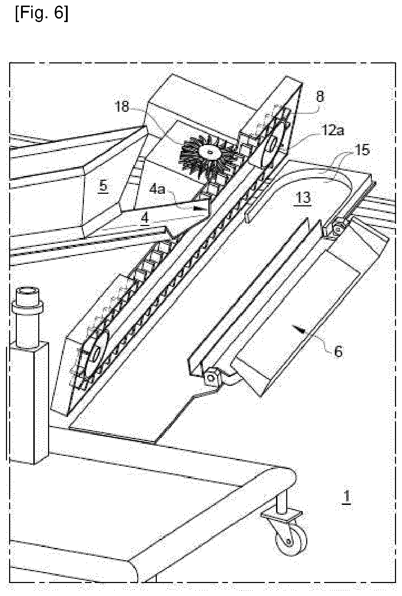

La figure 6 montre le dispositif de remplissage 1 selon l'invention dans une configuration opérationnelle pour de la maintenance, avec le capot 7 en position relevée, la gouttière de gavage 6 étant basculée sur le côté : l'intérieur de la cuve de guidage 13 devient accessible.

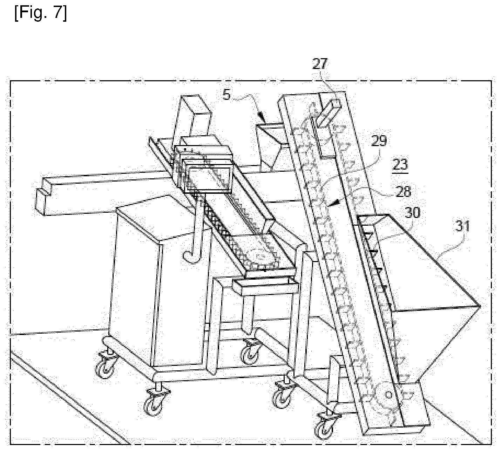

La figure 7 montre un deuxième alimentateur 23 selon l'invention motorisé par un deuxième servomoteur 27 ; le deuxième alimentateur 23 comprend une courroie 28 comprenant une bande de convoyage 29 et des ailettes 30 qui s'étendent sur la bande de convoyage 29 en étant régulièrement espacées. La courroie 28 du deuxième alimentateur fonctionne de la même manière en étant entraînée par le deuxième servomoteur 27 qui actionne la mise en rotation d'une des deux poulies du deuxième alimentateur 23. Le contenu du deuxième alimentateur est déversé en continu par une ouverture de sortie qui débouche au-dessus de la trémie 5, le deuxième alimentateur comporte aussi une gouttière de gavage 31 s'évasant vers sa partie supérieure à la manière d'une trémie. Les cellules délimitées entre les ailettes 30 du deuxième alimentateur 23 sont d'un volume plus important que les cellules de l'alimentateur 3 mentionné en premier lieu qui doit saupoudrer les récipients alimentaires 2.

## Revendications

1. Alimentateur (3) pour le convoyage de matières agroalimentaires comprenant :
- un ensemble de deux poulies d'entraînement, une première poulie (12a) et une deuxième poulie (12b), montées en rotation autour d'un premier axe XX' pour la première poulie et un deuxième axe YY' pour la deuxième poulie, et au moins l'une des deux poulies étant entraînée en rotation par un arbre d'entraînement motorisé ;
- une courroie (8) comportant :
▪ une bande de convoyage (9) comportant une face interne et une face externe, et destinée à être tendue entre ladite première poulie et ladite deuxième poulie, les deux poulies (12a et 12b) coopérant avec ladite face interne de la bande de convoyage (9) ; et
▪ des moyens de séparation (10) disposés régulièrement sur ladite face externe de la bande de convoyage ; et
- un moyen de guidage placée en regard de la face externe de la bande de convoyage, ledit moyen de guidage contenant un guide à section sensiblement en L (15) comprenant une première paroi, qualifiée de paroi de guidage (16) et une deuxième paroi fixée sur la première paroi, ledit guide (15) et lesdits moyens de séparation (10) étant positionnés en vis-à-vis ;
**caractérisé en ce que** les moyens de séparation comprennent deux types d'ailettes, des ailettes principales (10a) et des ailettes secondaires (10b) plus petites que les ailettes principales (10a) et intercalées entre les ailettes principales (10b).

2. Alimentateur (3) selon la revendication 1, dans lequel la paroi de guidage (16) intègre un profilé en arc de cercle qui s'étend continûment de part et d'autre d'une des deux poulies le long de la bande de convoyage (9) et une ouverture de sortie découpe au moins l'une des deux parois du guide à section sensiblement en L (15).

3. Alimentateur (3) selon l'une des revendications 1 ou 2, dans lequel le moyen de guidage est une cuve de guidage (13) fermée sur ses côtés par la paroi de guidage (16) qui enserre la courroie (8) et au moins une des deux poulies d'entraînement (12a et 12b).

4. Alimentateur (3) selon l'une des revendications 1 à 3, dans lequel les poulies d'entraînement (12a et 12b) sont des poulies comportant des dents, qualifiées de poulies dentées, et, la face interne de la bande de convoyage (9) comporte des rainurages (11) de forme complémentaire auxdites dents des poulies dentées.

5. Alimentateur (3) selon l'une des revendications 1 à 4, dans lequel l'arbre d'entrainement motorisé est actionné par un servomoteur (17).

6. Alimentateur (3) selon l'une des revendications 1 à 5, dans lequel les moyens de séparation (10) comprennent des ailettes (10a, 10b) s'étendant sur la face externe de la bande de convoyage.

7. Dispositif de remplissage (1) de récipients alimentaires (2) comprenant :
- un premier alimentateur (3) selon l'une des revendications 3 à 6 ;
- une plaque vibrante (4) comprenant un rebord (4a) qui s'étend au-dessus de la cuve de guidage (13) du premier alimentateur ; et
- une trémie (5) positionnée au-dessus de ladite plaque vibrante (4), destinée à comporter une composition alimentaire.

8. Dispositif de remplissage (1) selon la revendication 7, dans lequel le dispositif de remplissage comporte un deuxième alimentateur (23) selon l'une des revendications 3 à 6, dans lequel l'ouverture de sortie du deuxième alimentateur est positionné au-dessus de ladite trémie (5).

9. Dispositif de remplissage (1) selon l'une des revendications 7 ou 8, dans lequel le dispositif de remplissage comporte une brosse cylindrique (18) montée en regard de la cuve de guidage (13) du premier alimentateur (3).
